# EUROPEAN PATENT APPLICATION

(11) **EP 2 352 202 A1**
(43) Date of publication of application: **03.08.2011**
(21) Application number: 09829115.6
(22) Date of filing: 26.11.2009
(51) Int. Cl.: H01M 14/00, H01L 31/04

(54) **FUNCTIONAL DEVICE AND METHOD FOR PRODUCING THE SAME**

(30) Priority: 26.11.2008 JP 2008301174
(71) Applicant: Sony Corporation, Tokyo 108-0075 (JP)
(72) Inventor: YONEYA Reiko, Tokyo 108-0075 (JP); ORIHASHI Masaki, Tokyo 108-0075 (JP); MOROOKA Masahiro, Tokyo 108-0075 (JP); SUZUKI Yusuke, Tokyo 108-0075 (JP)
(74) Representative: Lewis, Darren John
(86) International application number: PCT/JP2009/069907
(87) International publication number: WO 2010/061870

(57) **Abstract**

The present invention relates to a functional device in which it is possible to improve durability by inhibiting corrosion due to an electrolyte solution, and it is possible to reduce series resistance, and also relates to a method for producing the same.

A functional device includes a transparent photoelectrode including a photoelectric substrate 11 and a photoelectrode layer 12a, a counter electrode substrate 18a composed of a metal, an electrolyte solution 15 filled in a space between the two substrates, a corrosion-resistant conductive layer 17a which is disposed on the counter electrode substrate and has corrosion resistance to the electrolyte solution, and a conductive catalyst layer 16. The counter electrode substrate is composed of any of Al, Cu, Ag, Au, and SUS; the corrosion-resistant conductive layer is composed of any of Ti, Cr, Ni, Nb, Mo, Ru, Rh, Ta, W, In, Pt, and Hastelloy; and the conductive catalyst layer is composed of any of carbon, Tu, Rh, Pd, Os, Ir, Pt, and conductive polymers.

## Description

### Technical Field

The present invention relates to a functional device in which it is possible to improve durability by inhibiting corrosion due to an electrolyte solution, and a method for producing the same. More particularly, the invention relates to a functional device using an electrolyte solution, for example, a device having a photoelectric conversion function, such as a dye-sensitized solar cell; or a device having an image display function, and a method for producing the same.

### Background Art

A typical example of a device having a photoelectric conversion function is a solar cell. Solar cells utilizing sunlight have been receiving attention as energy sources that replace fossil fuels, and various studies have been conducted on solar cells. Solar cells are a type of photoelectric conversion device that converts light energy into electrical energy, use sunlight as an energy source, and thus have a very small influence on the global environment. Therefore, wider use of solar cells is expected.

In recent years, dye-sensitized solar cells (DSCs) to which dye-sensitized, photoinduced electron transfer is applied have been receiving attention as next-generation solar cells replacing silicon (Si)-based solar cells and the like, and have been widely researched. As the sensitizing dye, a substance that can effectively absorb light in or near the visible light range, such as a ruthenium complex, is used. Dye-sensitized solar cells have high photoelectric conversion efficiency and can be fabricated easily with high productivity, using inexpensive semiconductor materials, such as titanium oxide, without requiring a large-scale manufacturing apparatus, such as a vacuum apparatus. Thus, dye-sensitized solar cells are expected as new-generation solar cells.

In general, solar cells are required to have a stable photoelectric conversion characteristic over a long period of time. Dye-sensitized solar cells usually contain, as a constituent element, a liquid electrolyte component. Characteristic degradation due to corrosion by the electrolyte solution has been considered as a major problem to obtaining a stable photoelectric conversion characteristic over a long period of time. Furthermore, use of a metal substrate to improve photoelectric conversion efficiency is under consideration. Various methods have been studied to solve the problems, and for example, methods described below have been proposed.

First, PTL 1, which is described below, titled "Manufacturing method of dye-sensitized photoelectric conversion element and paint for dye-sensitized photoelectric conversion element" includes the following description:

A counter electrode opposed to a photoelectrode has a structure in which a conductive layer and a catalyst layer are disposed in that order on a conductive substrate. Examples of the substrate of the counter electrode that can be used include a metal plate composed of Ni, Fe, Pt, Al, In, Sn, Cu, Zn, Ag, Au, Mo, Ti, Zr, SUS, or the like; a conductive oxide substrate composed of tin oxide, fluorine-doped tin oxide, tin-doped indium oxide, or the like; a substrate obtained by forming a conductive oxide film composed of tin oxide, fluorine-doped tin oxide, tin-doped indium oxide, or the like on a metal plate composed of Ni, Fe, Pt, Al, In, Sn, Cu, Z, Ag, Au, Mo, Ti, Zr, SUS, or the like; and a substrate obtained by forming a metal film composed of Ni, Fe, Pt, Al, In, Sn, Cu, Zn, Ag, Au, Mo, Ti, Zr, SUS, or the like on a conductive oxide substrate composed of tin oxide, fluorine-doped tin oxide, tin-doped indium oxide, or the like. In the case where the substrate is constituted by the metal plate or the conductive oxide substrate or the case where the substrate has a conductive property because it includes a conductive oxide film or a metal film, it is not necessary to provide a conductive layer. In the catalyst layer of the counter electrode, noble metal particles having a catalytic action are dispersed in a predetermined conductive polymer, and some of the particles are exposed at the surface.

Furthermore, PTL 2, which is described below, titled "Dye-sensitized solar cell" includes the following description:

A counter electrode has a structure in which a conductive polymer catalyst layer is disposed on the surface of an electrode base. Since the electrode base is used as a support and as a current collector for the conductive polymer catalyst layer, the surface portion of the electrode base preferably has a conductive property. As such a material, for example, a conductive metal or metal oxide, a carbon material, or a conductive polymer is preferably used. Examples of the metal include platinum, gold, silver, ruthenium, copper, aluminum, nickel, cobalt, chromium, iron, molybdenum, titanium, tantalum, and alloys thereof. The carbon material is not particularly limited, and examples thereof include graphite, carbon black, glassy carbon, carbon nanotubes, and fullerenes. Furthermore, when a metal oxide, such as FTO, ITO, indium oxide, zinc oxide, or antimony oxide, is used, because of its transparency or translucency, it is possible to increase the amount of light incident on the sensitizing dye layer. Thus, the metal oxide can be preferably used.

Furthermore, PTL 3, which is described below, titled "Dye-sensitized solar cell and its manufacturing method" includes the following description:

A counter electrode is constituted by a platinum catalyst layer and a conductive film 7 and is disposed on a base. The platinum catalyst layer is composed of a platinum film with a thickness of about 10 nm. As the material for the conductive film, gold, silver, aluminum, indium, tin oxide, zinc oxide, indium tin oxide (ITO), fluorine-doped tin oxide (FTO), or the like can be used. As the base, for example, a glass substrate, a plastic substrate, a metal substrate, or the like can be used.

Furthermore, PTL 4, which is described below, titled "Electrode material of dye-sensitized solar cell" describes an electrode material which is a metal material constituting an electrode of a dye-sensitized solar cell and which is in particular suitable for a "counter electrode" that comes into direct contact with an iodine-containing electrolyte solution to give electrons to ions in the solution.

Furthermore, PTL 5, which is described below, titled "Electrode material, conductive film using the material, solar cell, and photoelectrode" includes the following description:

An electrode material is characterized in that it is used as a conductive thin film in a conductive film in which the conductive thin film composed of a single or a plurality of conductive substances is disposed in one or two or more layers on a surface of a base film composed of a polymer resin; at least one of the conductive thin films composed of the conductive substances as the electrode material has a conductive property, which is a property of conducting electricity; and the electrode material is a substance having iodine resistance in which 80% or more in volume ratio of the conductive thin film remains without being dissolved even if 96 hours have passed in a state in which the conductive thin film is immersed in an iodine solution (a solution prepared by dissolving iodine, lithium iodide, tetrabutylammonium iodide (TBAI), and tributyl phosphate (TBP) in an acetonitrile solution) at 80°C.

The electrode material is characterized in that the conductive substance is any of nickel, titanium, chromium, niobium, platinum, iridium, stainless steel, tantalum, tungsten, and molybdenum, or an alloy of a plurality thereof, or a plurality of alloys including any of these metals.

In addition, NPL 1, which is described below, describes durability of a dye-sensitized solar cell in which a glass substrate is used for the light-sensing surface and a titanium plate is used for the counter electrode. However, a detailed structure of the counter electrode is not specified.

### Citation List

### Patent Literature

PTL 1: Japanese Unexamined Patent Application Publication No. 2006-278131 (paragraphs 0024, 0026, 0040, 0042, and 0044, Figs. 1 and 3)
PTL 2: Japanese Unexamined Patent Application Publication No. 2007-317446 (paragraphs 0051 to 0052, Fig. 1)
PTL 3: Japanese Unexamined Patent Application Publication No. 2008-186768 (paragraphs 0016 and 0031, Fig. 1)
PTL 4: Japanese Unexamined Patent Application Publication No. 2008-034110 (paragraphs 0001 and 0008 to 0017, Fig. 2)
PTL 5: Japanese Unexamined Patent Application Publication No. 2008-257948 (paragraphs 0014 to 0020)

### Non Patent Literature

NPL 1: Shimane Institute for Industrial Technology, "Dye-sensitized solar cell having excellent durability developed", [online], press release of February 7, 2008, [searched on November 1, 2008], internet <www.shimane-iit.jp/project/pr080207.pdf>

### Summary of Invention

### Technical Problem

In general, a conventional dye-sensitized solar cell includes a photoelectrode on which sunlight is incident and in which a transparent conductive layer and a semiconductor porous layer are disposed in that order on an insulating substrate, the semiconductor porous layer carrying a sensitizing dye; a counter electrode which is arranged so as to be opposed to the photoelectrode and in which a transparent conductive layer and a conductive catalyst layer are disposed in that order on an insulating layer; and an electrolyte solution sealed between the two electrodes.

In such a structure, as the insulating substrate constituting each of the photoelectrode and the counter electrode, a glass or organic resin plate has been used. As the transparent conductive layer constituting each of the photoelectrode and the counter electrode, a layer composed of fluorine-doped tin oxide (FTO), indium-doped tin oxide (ITO), or the like has been used. As the conductive catalyst layer, a layer of a noble metal, such as platinum (Pt), has been used. Furthermore, as the electrolyte solution, a solution in which an iodine-based redox couple is dissolved in an organic solvent, such as acetonitrile, has been used.

In the structure of the conventional dye-sensitized solar cell, it has not been possible to sufficiently decrease the series resistance of the dye-sensitized solar cell because of the electrical resistance of the insulating substrate and the transparent conductive layer constituting each of the photoelectrode and the counter electrode and the contact resistance between the two layers, and also the electrical resistance of the transparent conductive layer and the conductive catalyst layer of the counter electrode and the contact resistance between the two layers. Consequently, it has been difficult to increase the fill factor (FF) to improve the photoelectric conversion characteristic. Furthermore, it has been required to take countermeasures against the decrease in durability due to degradation and the like resulting from corrosiveness of iodine in the layers constituting the dye-sensitized solar cell.

In the description below, the term "photoelectrode layer" means a transparent electrode layer disposed on the light incident side or on the viewing (observation) side, and may be simply referred to as an "electrode layer". Furthermore, the term "counter electrode layer" means a layer disposed so as to be opposed to the "photoelectrode layer" and including a combination of three components: a metal substrate, a corrosion-resistant conductive layer, and a conductive catalyst layer, and may be simply referred to as a "counter electrode". Note that the expressions "corrosion-resistant conductive layer" and "conductive catalyst layer" used below are used in order to indicate that the thickness of the "metal substrate" is at least 100 times that of the "corrosion-resistant conductive layer" or the "conductive catalyst layer".

The present invention has been achieved in order to solve the problems described above. It is an object of the present invention to provide a functional device in which a metal substrate is used as a substrate for a counter electrode and corrosion due to an electrolyte solution is inhibited so that durability can be improved, and a method for producing the same.

### Solution to Problem

That is, the present invention relates to a functional device including a first substrate having a light-transmitting property (for example, a first substrate (photoelectric substrate) 11 in the embodiment described below), an electrode layer having a conductive property and a light-transmitting property and disposed on the first substrate (for example, an electrode layer (photoelectrode layer) 12a in the embodiment described below), a second substrate composed of a metal (for example, a second substrate (counter electrode substrate) 18a or 18b in the embodiment described below), an electrolyte solution filled in a space between the first substrate and the second substrate (for example, an electrolyte solution 15 in the embodiment described below), a corrosion-resistant conductive layer having corrosion resistance to the electrolyte solution and disposed on the second substrate (for example, a corrosion-resistant conductive layer 17a or 17b in the embodiment described below), and a conductive catalyst layer having a conductive property and a catalytic activity and disposed on a surface of the corrosion-resistant conductive layer (for example, a conductive catalyst layer 16 in the embodiment described below).

Furthermore, the present invention relates to a method for producing a functional device including a first step of forming a corrosion-resistant conductive layer (for example, a corrosion-resistant conductive layer 17a or 17b in the embodiment described below) having corrosion resistance to an electrolyte solution (for example, an electrolyte solution 15 in the embodiment described below) on a surface of a substrate composed of a metal (for example, a second substrate (counter electrode substrate) 18a or 18b in the embodiment described below); and a second step of forming a conductive catalyst layer having a conductive property and a catalytic activity (for example, a conductive catalyst layer 16 in the embodiment below) on a surface of the corrosion-resistant conductive layer.

### Advantageous Effects of Invention

According to the present invention, it is possible to provide a functional device in which the second substrate is composed of the metal, and the corrosion-resistant conductive layer and the conductive catalyst layer are disposed thereon so that durability can be improved by inhibiting corrosion due to the electrolyte solution, and series resistance of three components: the second substrate, the corrosion-resistant conductive layer, and the conductive catalyst can be reduced.

Furthermore, according to the present invention, it is possible to provide a method for producing a functional device in which by forming the corrosion-resistant conductive layer and the conductive catalyst layer on the substrate composed of the metal, durability can be improved by inhibiting corrosion due to the electrolyte solution, and series resistance of three components: the substrate, the corrosion-resistant conductive layer, and the conductive catalyst can be reduced.

### Brief Description of Drawings

[Fig. 1] Fig. 1 is a cross-sectional view schematically showing a structural example of a dye-sensitized solar cell according to an embodiment of the present invention.
[Fig. 2] Fig. 2 is a cross-sectional view schematically showing a structural example of a dye-sensitized solar cell according to the embodiment of the present invention.
[Fig. 3] Fig. 3 is a cross-sectional view schematically showing an example of arrangement of lead electrodes of a dye-sensitized solar cell according to the embodiment of the present invention.
[Fig. 4] Fig. 4 includes cross-sectional views schematically showing steps of fabricating a counter electrode layer of a dye-sensitized solar cell according to the embodiment of the present invention.
[Fig. 5] Fig. 5 is a cross-sectional view schematically showing a structural example of an image display device according to the embodiment of the present invention.
[Fig. 6] Fig. 6 is a cross-sectional view schematically showing a structural example of an image display device according to the embodiment of the present invention.
[Fig. 7] Fig. 7 is a cross-sectional view schematically showing a structural example of an anti-glare mirror according to the embodiment of the present invention.
[Fig. 8] Fig. 8 is a diagram showing examples of the sensitizing dye used in Example of the present invention.
[Fig. 9] Fig. 9 is a table showing an example of the composition of an electrolyte solution used in a dye-sensitized solar cell in Example of the present invention.
[Fig. 10] Fig. 10 includes a diagram showing an example of the photoelectric conversion characteristic of dye-sensitized solar cells in Example of the present invention.
[Fig. 11] Fig. 11 is a diagram showing an example of an impedance characteristic of a dye-sensitized solar cell in Example of the present invention.

### Description of Embodiments

The functional device of the present invention preferably has a structure in which the metal is any of aluminum, copper, silver, gold, and stainless steel, and the corrosion-resistant conductive layer is composed of any of titanium, chromium, nickel, niobium, molybdenum, ruthenium, rhodium, tantalum, tungsten, iridium, platinum, and Hastelloy. In such a structure, even in the case where the metal is corroded by the electrolyte solution, the metal is protected by the corrosion-resistant conductive layer, and durability can be improved. Furthermore, series resistance can be reduced. In addition, in the case where the corrosion-resistant conductive layer is composed of chromium or nickel, the corrosion-resistant conductive layer also serves as an underlayer of the conductive catalyst layer. The underlayer is formed in close contact with the metal and the conductive catalyst layer is formed in close contact with the underlayer. Therefore, the conductive catalyst layer can be formed stably.

Furthermore, preferably, the conductive catalyst layer is composed of any of carbon, ruthenium, rhodium, palladium, osmium, iridium, platinum, and conductive polymers. In such a structure, since the conductive catalyst layer has corrosion resistance to the electrolyte solution, durability can be improved.

Furthermore, preferably, the metal is any of titanium, niobium, molybdenum, ruthenium, rhodium, tantalum, tungsten, iridium, platinum, and Hastelloy. In such a structure, since the metal has corrosion resistance to the electrolyte solution, durability can be improved. Furthermore, series resistance can be reduced.

Furthermore, preferably, the corrosion-resistant conductive layer is composed of chromium or nickel. In such a structure, since the metal is protected by the corrosion-resistant conductive layer, durability can be improved. Furthermore, the corrosion-resistant conductive layer disposed on the metal also serves as an underlayer of the conductive catalyst layer, the underlayer is formed in close contact with the metal, and the conductive catalyst layer is formed in close contact with the underlayer. Therefore, the conductive catalyst layer can be formed stably.

Furthermore, preferably, a structure is used in which the metal is chromium or nickel and also serves as the corrosion-resistant conductive layer. In such a structure, since the metal has corrosion resistance to the electrolyte solution, it is not necessary to form a layer having corrosion resistance to the electrolyte solution so as to overlie the metal, and thus a simple structure can be used. Furthermore, series resistance can be reduced.

Furthermore, preferably, the conductive catalyst layer contains any of carbon, ruthenium, rhodium, palladium, osmium, iridium, platinum, and conductive polymers. In such a structure, since the conductive catalyst layer has corrosion resistance to the electrolyte solution, durability can be improved.

Furthermore, preferably, the electrolyte solution contains iodine/iodide generating a redox couple I₃⁻/I⁻. In such a structure, the electrolyte solution which is generally used can be used.

Furthermore, preferably, a structure is used in which an opening for filling the space with the electrolyte solution is formed so as to pass through the second substrate, and the corrosion-resistant conductive layer and the conductive catalyst layer are disposed in that order from the lower side on the surface of the opening. In such a structure, even in the case where the electrolyte solution remains on the surface of the opening in the process of filling the electrolyte solution between the first substrate and the second substrate or in the case where, after the opening is sealed with an end seal (sealant), the opening is not entirely sealed with the end seal (sealant) and the electrolyte solution is in contact with a part of the surface of the opening, since the metal has corrosion resistance to the electrolyte solution or the metal is protected by the corrosion-resistant conductive layer, durability can be improved.

Furthermore, preferably, a structure is used in which the area of the second substrate is smaller than the area of the first substrate, and a lead electrode is provided so as to be connected to a surface of the second substrate opposed to the surface in contact with the electrolyte solution. In such a structure, the second substrate composed of the metal serves as a support of the conductive catalyst layer and also serves as a current collector, and the lead electrode can be connected to the surface not in contact with the electrode solution. Thus, the series resistance of the functional device can be reduced, and the size of the functional device can be decreased, resulting in an increase in the number of functional devices which can be arranged per unit area.

Furthermore, preferably, the functional device is configured as a device having a photoelectric conversion function, an image display function, or an anti-glare function. In such a structure, it is possible to provide a functional device in which series resistance can be reduced and durability can be improved.

Furthermore, preferably, the functional device is configured as a device having a photoelectric conversion function and also configured as a dye-sensitized photoelectric conversion device in which a semiconductor porous layer carrying a sensitizing dye is disposed on the surface of the electrode layer, electrons of the sensitizing dye excited by light absorption are extracted to the semiconductor porous layer, and the sensitizing dye which has lost the electrons is reduced by a reducing agent in the electrolyte solution. In such a structure, it is possible to provide a dye-sensitized photoelectric conversion device in which series resistance can be reduced, the photoelectric conversion characteristic can be improved, and durability can be improved.

Furthermore, preferably, the functional device is configured as a device having an image display function in which the electrolyte solution contains metal ions that are deposited by reduction reaction on the electrode layer to generate color. In such a structure, it is possible to provide an image display device in which series resistance can be reduced and durability can be improved.

Furthermore, preferably, the functional device is configured as a device having an image display function in which a semiconductor porous layer carrying an electrochromic dye that generates color by oxidation reaction or reduction reaction is disposed on the electrode layer. In such a structure, it is possible to provide an image display device in which series resistance can be reduced and durability can be improved.

Furthermore, preferably, the functional device is configured as a device having an anti-glare function in which a coloration layer containing an oxidation coloration-type or reduction coloration-type electrochromic compound is disposed on a surface of the electrode layer. In such a structure, it is possible to provide an anti-glare device in which series resistance can be reduced and durability can be improved.

In the method for producing a functional device according to the present invention, preferably, the metal is any of aluminum, copper, silver, gold, and stainless steel, and the conductive catalyst layer is composed of any of titanium, chromium, nickel, niobium, molybdenum, ruthenium, rhodium, tantalum, tungsten, iridium, platinum, and Hastelloy. In such a structure, it is possible to provide a method for producing a functional device in which, even in the case where the metal is corroded by the electrolyte solution, the metal is protected by the corrosion-resistant conductive layer, durability can be improved, and also series resistance can be reduced. Furthermore, in the case where the corrosion-resistant conductive layer is composed of chromium or nickel, the corrosion-resistant conductive layer also serves as an underlayer of the conductive catalyst layer. The underlayer is formed in close contact with the metal and the conductive catalyst layer is formed in close contact with the underlayer. Therefore, it is possible to provide a method for producing a functional device in which the conductive catalyst layer can be formed stably.

Furthermore, preferably, the conductive catalyst layer is composed of any of carbon, ruthenium, rhodium, palladium, osmium, iridium, platinum, and conductive polymers. In such a structure, since the conductive catalyst layer has corrosion resistance to the electrolyte solution, it is possible to provide a method for producing a functional device in which durability can be improved.

Furthermore, preferably, the method includes, prior to the first step, a step of forming an opening for injecting the electrolyte solution in the substrate so as to pass through the substrate, wherein, in the first and second steps, the corrosion-resistant conductive layer and the conductive catalyst layer are formed in that order from the lower side on the surface of the opening. In such a structure, even in the case where the electrolyte solution remains on the surface of the opening in the process of filling the electrolyte solution in the functional device, or in the case where, after the opening is sealed with an end seal (sealant), the opening is not entirely sealed with the end seal (sealant) and the electrolyte solution is in contact with a part of the surface of the opening, since the metal is protected by the corrosion-resistant conductive layer, it is possible to provide a method for producing a functional device in which durability can be improved.

In the functional device of the present invention, by using a metal substrate having a small resistance as the substrate of the counter electrode and by forming a corrosion-resistant conductive layer having a low resistance on the surface of the metal substrate, corrosion due to the electrolyte solution can be inhibited, and electrical resistance can be reduced.

Examples of a functional device according to the present invention will be described in detail below with reference to the drawings. First, a dye-sensitized solar cell will be described as an example of a photoelectric conversion device.

### EXAMPLE 1

### <Embodiment>

### [Structural example of_ dye-sensitized solar cell (first)]

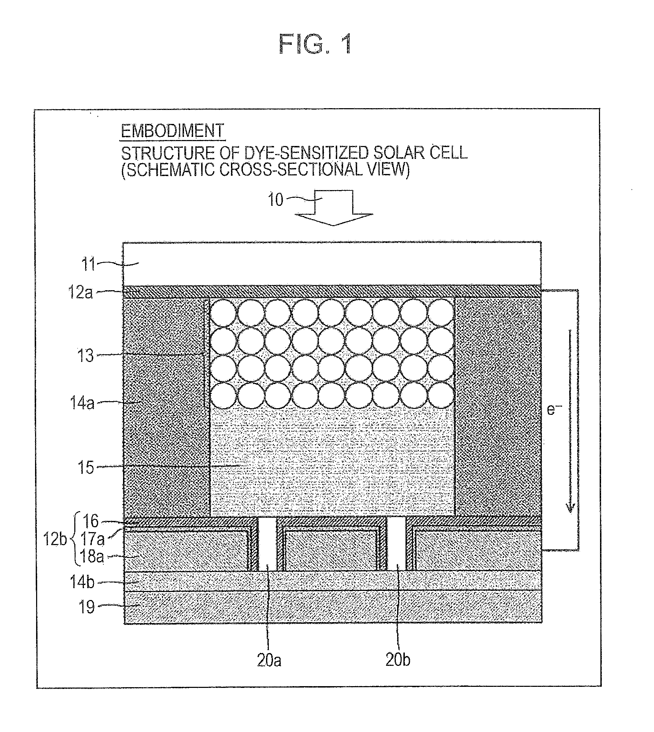

Fig. 1 is a cross-sectional view schematically showing a structural example of a dye-sensitized solar cell according to an embodiment of the present invention.

As shown in Fig. 1, the dye-sensitized solar cell includes a photoelectrode on which sunlight 10 is incident, a counter electrode opposed to the photoelectrode, and an electrolyte solution 15 held between the between the two electrodes. The photoelectrode includes a transparent photoelectrode layer (electrode layer, first electrode layer) 12a disposed on a transparent photoelectrode substrate (first substrate) 11, and a semiconductor porous layer 13 carrying a sensitizing dye is disposed on the photoelectrode layer 12a.

The semiconductor porous layer 13 is, for example, composed of nanosized titanium oxide (TiO₂) and the sensitizing dye is, for example, a ruthenium bipyridyl complex. The counter electrode is constituted by a counter electrode substrate (second substrate) 18a composed of a metal and a corrosion-resistant conductive layer 17a and a conductive catalyst layer 16 disposed thereon. The three components: the counter electrode substrate 18a, the corrosion-resistant conductive layer 17a, and the conductive catalyst layer 16 constitute a counter electrode layer (second electrode layer) 12b. The counter electrode substrate 18a serves as a support for the conductive catalyst layer 16 and is used as a current collector.

The counter electrode substrate 18a is a metal substrate having a low resistance, for example, composed of aluminum, copper, stainless steel (SUS), or the like, and the corrosion-resistant conductive layer 17a is, for example, composed of chromium, nickel, titanium, ruthenium or the like.

The electrolyte solution 15 is, for example, a solution in which a redox system of iodine and iodine ions is dissolved in a nitrile solvent. The electrolyte solution 15 filled through electrolyte solution injection holes 20a and 20b is sealed and held between the photoelectrode and the counter electrode by a main seal (sealant 14a), an end seal (sealant 14b), and an end seal plate 19.

When irradiated with sunlight 10, electrons of the sensitizing dye in the ground state are excited to an excited state, and the excited electrons are injected into the conduction band of the titanium oxide semiconductor, collected by the electrode layer 12a, and move through an external circuit to the counter electrode. The electrons which have moved to the counter electrode are transported by ions in the electrolyte solution 15 and return to the sensitizing dye in the ground state.

By repeating the process described above, a reduced form I⁻ is oxidized to an oxidized form I₃⁻ on the photoelectrode side, and the oxidized form I₃⁻ is reduced back to the original reduced form I⁻ on the counter electrode side. That is, owing to the occurrence of the oxidation reaction (3I⁻ → I₃⁻ + 2e⁻) of the reducing agent I⁻ on the photoelectrode side and the reduction reaction (I₃⁻ + 2e → 3I⁻) of the oxidant I₃⁻ (combination of I₂ and I⁻) on the counter electrode, light is converted into electric current and electrical energy is extracted outward.

Next, the constituent elements of the dye-sensitized solar cell will be described in sequence.

### [Photoelectrode substrate (first substrate)]

As the photoelectrode substrate (first substrate) 11, a substrate that has a high light-transmitting property in the visible light range, excellent barrier properties with respect to water, various gases such as oxygen, and organic solvents, high solvent resistance, and high weatherability is preferable, and a transparent inorganic substrate or a transparent resin substrate can be used.

Examples of the transparent inorganic substrate that can be used include quartz, sapphire, and glass. Examples of the transparent resin substrate that can be used include polyethylene terephthalate (PET), cellulose triacetate (TAC), polyethylene naphthalate (PEN), polycarbonate (PC), polymethyl methacrylate (PMMA), polyester, polypropylene (PP), polyarylate (PAr), polyether sulfone (PES), polyetheretherketone (PEEK), polyphenylene sulfide (PPS), polyvinylidene fluoride, polyimide (PI), polyamide (PA), polysulfone (PS), polyether imide (PEI), polyolefin, polystyrene, polymethylpentene, and cellulose triacetate.

### [Photoelectrode layer (electrode layer, first electrode layer)]

As the photoelectrode layer (electrode layer, first electrode layer) 12a, for example, a transparent electrode composed of MgO (Magnesium Oxide), ZnO (Zinc Oxide), SnO₂ (Tin Oxide), FTO (Fluorine-doped Tin Oxide), GTO (Gallium Tin Oxide), ITO (Indium Tin Oxide), ATO (Antimony-doped Tin Oxide), AZO (Aluminum-doped Zinc Oxide), GZO (Gallium-doped Zinc Oxide), IZO (Indium Zinc Oxide), or the like can be used.

### [Counter electrode substrate (second substrate) (first)]

In the structure shown in Fig. 1, the counter electrode substrate (second substrate) 18a serves as a support for the conductive catalyst layer 16 and also serves as a current collector. The material for the counter electrode substrate 18a is any of aluminum (Al), copper (Cu), silver (Ag), gold (Au), and stainless steel (SUS). SUS is an alloy in which about 12% or more of chromium is incorporated into iron (Fe), to which aluminum (Al), titanium(Ti), manganese (Mn), nickel (Ni), copper (Cu), niobium (Nb), molybdenum (Mo), or the like may be added. Typically, general-purpose SUS304 or SUS403 can be used.

In addition, preferably, the side surface, facing the electrolyte solution 15, of the counter electrode substrate 18a is formed into a mirror surface and a light-reflecting surface in view of effective use of sunlight.

### [Corrosion-resistant conductive layer]

The corrosion-resistant conductive layer 17a is composed of any of titanium (Ti), chromium (Cr), nickel (Ni), niobium (Nb), molybdenum (Mo), ruthenium (Ru), rhodium (Rh), tantalum (Ta), tungsten (W), iridium (Ir), platinum (Pt), and Hastelloy.

In the case where the corrosion-resistant conductive layer 17a is composed of chromium or nickel, and a chromium layer or a nickel layer is disposed on the counter electrode substrate 18a, the corrosion-resistant conductive layer 17a is formed in close contact with the counter electrode substrate 18a and serves as an underlayer of the conductive catalyst layer 16. Thus, the conductive catalyst layer 16 can be formed in close contact with the underlayer.

### [Conductive catalyst layer]

The conductive catalyst layer 16 has a catalytic activity that promotes reduction reaction in which the oxidized form of the redox couple contained in the electrolyte solution 15 is reduced to the reduced form, serves as a catalyst, and has corrosion resistance to iodine in the electrolyte solution 15.

As the conductive catalyst layer 16 having a catalytic activity with respect to the redox couple, for example, carbon (C), ruthenium (Ru), rhodium (Rh), palladium (Pd), osmium (Os), iridium (Ir), platinum (Pt), a conductive polymer, or the like that has a conductive property and a catalytic activity can be used. As the material constituting the conductive catalyst layer, platinum having high corrosion resistance to the constituent contained in the electrolyte solution is particularly preferable.

As the conductive polymer, polypyrrole, polythiophene, polyaniline, polyfuran, polyacetylene, polyphenylene, polyazulene, polyfluorene, a derivative of any of these, poly(3,4-ethylenedioxythiophene)/polystyrene sulfonate (PEDOT/PSS), or the like can be used.

### [Semiconductor porous layer]

The semiconductor material constituting the semiconductor porous layer 13 is preferably an n-type semiconductor material in which conduction band electrons serve as carriers under photoexcitation to generate an anode current, and is preferably anatase-type titanium oxide TiO₂. Besides, for example, MgO, ZnO, SnO₂, WO₃, Fe₂O₃, In₂O₃, Bi₂O₃, Nb₂O₅, SrTiO₃, BaTiO₃, ZnS, CdS, CdSe, CdTe, PbS, CuInS, InP, or the like can be used.

### [Sensitizing dye]

As the sensitizing dye carried by semiconductor fine particles, a complex containing a metal, such as ruthenium (Ru), zinc (Zn), platinum (Pt), or palladium (Pd), can be used.

Typical examples include ruthenium complex dyes in which ligands having a bipyridine structure, a terpyridine structure, or the like are coordinated. Examples thereof include a dye commonly called N3 (RuL₂(NCS)₂), a dye commonly called N719 (RuL₂(NCS)₂·2TBA), a dye commonly called Red dye (RuL₂(NCS)₂·2TBA), and a dye commonly called Black dye (RuL'₂(NCS)₃·3TBA), wherein L represents 4,4'-dicarboxy-2,2'-bipyridine, L' represents 4,4',4"-tetra-carboxy-2,2',2"-terpyridine, and TBA represents a tetrabutylammonium cation. Ru bipyridine complex compounds have high quantum yield, thus being particularly preferable.

In addition, as long as a sensitizing effect is produced, other dyes, such as xanthene dyes, cyanine dyes, porphyrin dyes, anthraquinone dyes, and polycyclic quinone dyes, may be used.

### [Electrolyte solution]

The electrolyte solution 15 contains an electrolyte composed of a combination (iodine/iodide) of iodine (I₂) and an iodide (metal iodide or organic iodide), and water or any of various organic solvents that dissolves the electrolyte, and generates an I₃⁻/I⁻ redox couple.

Examples of the metal iodide include LiI, NaI, KI, CsI, CaI₂, and the like. Examples of the organic iodide include tetraethylammonium iodide, tetrapropylammonium iodide, tetrabutylammonium iodide, and the like.

A structure may be used in which the electrolyte solution 15 contains an electrolyte composed of a combination of bromine (Br₂) and a metal bromide or organic bromide, and water or any of various organic solvents that dissolves the electrolyte, and generates a Br₃⁻/Br⁻ redox couple. In such a case, as the metal bromide or organic bromide, compounds corresponding to the metal iodides or organic iodides described above can be used.

As the solvent of the electrolyte solution 15, usually, water, any of various organic solvents, or an ionic liquid can be used. Examples of the organic solvent that can be used include alcohol solvents, such as methanol, ethanol, isopropyl alcohol, ethylene glycol, propylene glycol, and polyethylene glycol; ether solvents, such as dioxane and diethyl ether; nitrile solvents, such as acetonitrile and benzonitrile; carbonate solvents, such as ethylene carbonate and propylene carbonate; and other organic solvents, such as gamma-butyrolactone, pyridine, dimethylformamide, dimethylacetamide, and dimethyl sulfoxide. As the ionic liquid, methylpropyl imidazolium-iodine (MPII) or the like can be used.

Furthermore, by mixing the electrolyte solution with a gelling agent, a polymer, a crosslinking monomer, or the like, the electrolyte solution can be used in a transparent gel state. Thereby, it is possible to reduce liquid leakage and vaporization of the composition of the electrolyte solution. Furthermore, it is of course possible to incorporate additives composed of inorganic compounds or organic compounds into the electrolyte solution.

### [Sealant]

The main seal 14a holds a gap between the photoelectrode and the counter electrode, and also prevents entry of moisture, oxygen, carbon dioxide, and the like from the outside. The end seal 14b closes the injection holes 20a and 20b for the electrolyte solution, and together with the end seal plate 19, suppresses entry of moisture, oxygen, carbon dioxide, and the like from the outside and leakage of the electrolyte solution 15 to the outside.

As the main seal 14a and the end seal 14b, for example, an epoxy resin or an acrylic resin can be used, and for example, a resin that can be cured by heat or ultraviolet light and that has a gas barrier property can be used. The main seal 14a and the end seal 14b may be composed of the same resin or different resins.

In order to suppress degradation of the electrolyte solution 15 and the sensitizing dye due to high-temperature exposure during curing of the resin, as the main seal 14a and the end seal 14b, preferably, an ultraviolet-curable resin which is not denatured even if coming into contact with the electrolyte solution 15 before or after curing, in which bonding strength does not decrease after being cured, which has good iodine resistance, and which can be cured at low temperature is used. Furthermore, more preferably, the ultraviolet-curable resin has low permeability to the solvent of the electrolyte solution 15, water, and oxygen after being cured.

### [Production steps]

The production steps of the dye-sensitized solar cell are summarized as follows: First, the main seal 14a is applied by coating onto the photoelectrode layer 12a so as to annularly surround the semiconductor porous layer 13 carrying the sensitizing dye, and the photoelectrode layer and the counter electrode are bonded to each other such that a predetermined space is held therebetween. Next, the electrolyte solution 15 is injected (filled) into the space from one of the electrolyte solution injection holes 20a and 20b formed in the counter electrode substrate 18a. Lastly, the end seal plate 19 is bonded to the counter electrode substrate 18a by the end seal 14b so that the electrolyte solution 15 is blocked from the outside, sealed inside, and prevented from leaking to the outside.

Note that as each of the main seal 14a and the end seal 14b, a material that has a property of not easily allowing various gases and liquids to permeate and not easily being degraded due to corrosion is used. As the end seal plate 19, a glass plate, a metal plate, or the like that has the similar property is used. Furthermore, the electrolyte solution 15 may be injected from an injection hole other than the injection holes provided in the second electrode layer 12b.

As described above, even in the case where a metal substrate composed of aluminum, copper, stainless steel, or the like that is inexpensive and has low resistance is used as the counter electrode substrate 18a, by forming a corrosion-resistant conductive layer using a metal that has corrosion resistance to iodine and low resistance on the surface of the counter electrode substrate 18a, it is possible to realize a dye-sensitized solar cell in which corrosion due to the electrolyte solution can be suppressed, and photoelectric conversion efficiency can be improved by reducing the series resistance to increase the fill factor (FF).

### [Structural example of dye-sensitized solar cell (second)]

The structure of the dye-sensitized solar cell of a structural example (second) is the same as the structural example (first) except for the structure of the counter electrode. Thus, only the structure of the counter electrode, which is different, will be described below.

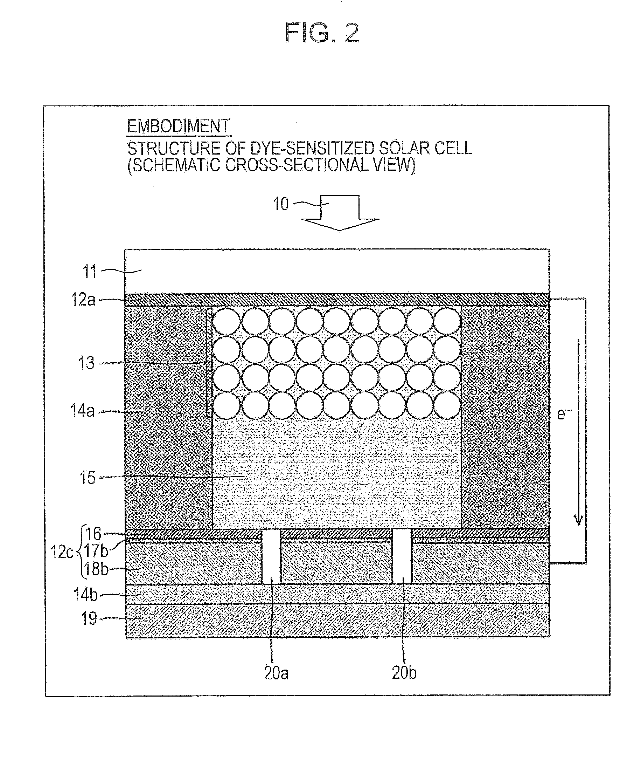

Fig. 2 is a cross-sectional view schematically showing a structural example of a dye-sensitized solar cell according to the embodiment of the present invention.

### [Counter electrode substrate (second substrate) (second)]

In the structure shown in Fig. 2, a counter electrode substrate (second substrate) 18b is a metal plate having corrosion resistance to iodine. The three components: a counter electrode substrate 18b, a corrosion-resistant conductive layer 17b, and a conductive catalyst layer 16 constitute a counter electrode layer (second electrode layer) 12c. The counter electrode substrate 18b serves as a support for the conductive catalyst layer 16 and is used as a current collector.

The counter electrode substrate 18b is composed of any of titanium (Ti), niobium (Nb), molybdenum (Mo), ruthenium (Ru), rhodium (Th), tantalum (Ta), tungsten (W), iridium (Ir), platinum (Pt), and Hastelloy (registered trademark of Haynes International). The corrosion-resistant conductive layer 17b is composed of chromium (Cr) or nickel (Ni).

A chromium layer or a nickel layer as the corrosion-resistant conductive layer 17b is formed in close contact with the counter electrode substrate 18b and serves as an underlayer of the conductive catalyst layer 16. The conductive catalyst layer 16 can be formed in close contact with the underlayer. Hastelloy is an alloy containing nickel (Ni) as a main component, and Hastelloy B, Hastelloy CX, Hastelloy G, and the like, containing chromium (Cr), iron (Fe), cobalt (Co), copper (Cu), molybdenum (Mo), tungsten (W), and the like, in different amounts can be used.

Furthermore, chromium or nickel may be selected as the material for the counter electrode substrate 18b. In such a case, the counter electrode substrate 18b can be configured to also serve as a corrosion-resistant conductive layer 17b, and it is not necessary to specially form the corrosion-resistant conductive layer 17b.

In addition, preferably, the side surface, facing the electrolyte solution 15, of the counter electrode substrate 18a is formed into a mirror surface and a light-reflecting surface in view of effective use of sunlight.

### [Example of arrangement of lead electrode of dye-sensitized solar cell]

As described above, in the structure of the dye-sensitized solar cell of each of the structural examples (first) and (second), the counter electrode substrate 18a or 18b serves as a support for the conductive catalyst layer 16 and also is used as a current collector. In order to use the counter electrode substrate 18a or 18b as a support and as a current collector, its thickness is set at 0.4 to 2 mm, and preferably 0.5 mm.

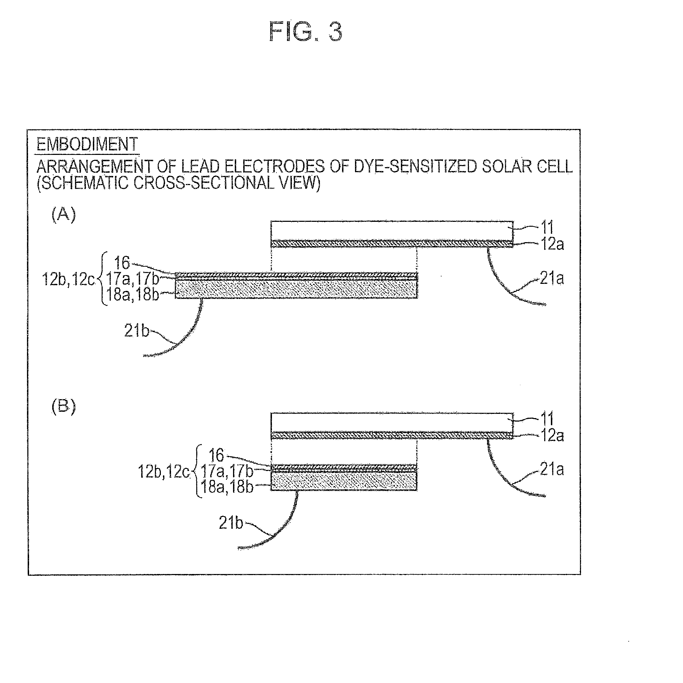

Fig. 3 is a cross-sectional view schematically showing an example of arrangement of lead electrodes of a dye-sensitized solar cell according to the embodiment of the present invention.

In Fig. 3, the semiconductor porous layer 13, the electrolyte solution 15, and the main seal 14a existing in the range indicated by dotted lines are omitted, and the end seal 14b, the end seal plate 19, and the electrolyte solution injection holes 20a and 20b are also omitted. Only relevant portions are shown.

Fig. 3(A) shows an example in which the photoelectrode and the counter electrode are arranged so as to form tab structures at both ends, a lead electrode 21a is disposed on a surface of the photoelectrode layer 12a exposed to the outside, and a lead electrode 21b is disposed on a surface of the counter electrode substrate 21b opposed to the surface in contact with the electrolyte solution.

Fig. 3(B) shows an example in which the area of the counter electrode substrate is smaller than the area of the photoelectrode substrate, the photoelectrode and the counter electrode are arranged so as to form a tab structure at one end, a lead electrode 21a is disposed on a surface of the photoelectrode layer 12a exposed to the outside, and a lead electrode 21b is disposed on a surface of the counter electrode substrate 21b opposed to the surface in contact with the electrolyte solution.

In the arrangement of the lead electrodes shown in Figs. 3(A) and 3(B), the series resistance of the dye-sensitized solar cell can be reduced. In particular, in the arrangement of the lead electrodes shown in Fig. 3(B), the size of the dye-sensitized solar cell can be decreased, resulting in an increase in the number of dye-sensitized solar cells which can be arranged per unit area.

Furthermore, in the dye-sensitized solar cells of the (structural example 1) and the structural example (second) described above, sunlight 10 is applied from the photoelectrode side. However, a structure may be used in which sunlight 10 is applied from the counter electrode side. In such a case, in each of Figs. 1 and 2, a structure may be used in which the counter electrode constituted by the second electrode layer 12b or 12c, the end seal 14b, and the end seal plate 19 and the photoelectrode constituted by the first substrate 11 and the photoelectrode layer 12a are vertically counterchanged, and the semiconductor porous layer 12 provided with the sensitizing dye is disposed on the counter electrode, and in which sunlight 10 is applied from the first substrate 11. Note that a conductive catalyst layer 16 is also disposed on the photoelectrode layer 12a.

### [steps of fabricating counter electrode layer of dye-sensitized solar cell]

The steps of fabricating a counter electrode used in the dye-sensitized solar cell in each of the structural examples (first) and (second) described above will be summarized below.

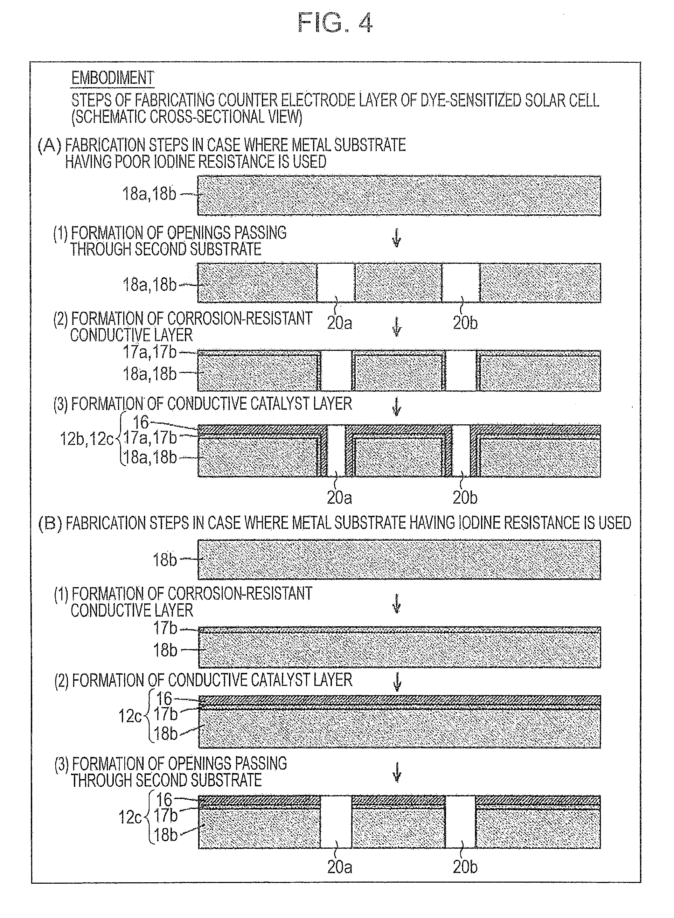

Fig. 4 includes cross-sectional views schematically showing steps of fabricating a counter electrode layer of a dye-sensitized solar cell according to the embodiment of the present invention.

Fig. 4(A) shows steps of fabricating a counter electrode layer 12b or 12c used for the dye-sensitized solar cell of the structural example (first) shown in Fig. 1.

As shown in Fig. 4(A)(1), openings passing through a counter electrode substrate 18a or 18b are formed. Next, as shown in (2), a corrosion-resistant conductive layer 17a or 17b is formed on one surface of the counter electrode substrate 18a or 18b and inner surfaces of the openings. Lastly, as shown in (3), a conductive catalyst layer 16 is formed on the surface of the corrosion-resistant conductive layer 17a or 17b including the internal surfaces of the openings.

The fabrication steps shown in Fig. 4(A) are applied to a case where a metal substrate having poor iodine resistance is used. However, it is of course possible to apply them to a case where a metal substrate having good iodine resistance is used, and in such a case, the corrosion-resistant conductive layer 17a or 17b may be omitted.

Fig. 4(B) shows steps of fabricating a counter electrode layer 12c used for the dye-sensitized solar cell of the structural example (second) shown in Fig. 2.

As shown in Fig. 4(B)(1), a corrosion-resistant conductive layer 17b is formed on one surface of a counter electrode substrate 18b. Next, as shown in (2), a conductive catalyst layer 16 is formed on the surface of the corrosion-resistant conductive layer 17b. Lastly, openings passing through the three components: the conductive catalyst layer 16, the corrosion-resistant conductive layer 17b, and the counter electrode substrate 18b are formed.

The fabrication steps shown in Fig. 4(B) are applied to a case where a metal substrate having good iodine resistance is used. When chromium or nickel is used as the metal substrate, the corrosion-resistant conductive layer 17b may be omitted.

Descriptions have been made above on the dye-sensitized solar cell. Next, an electrochromic device as an example of an image display device will be described.

### [Structural example of image display device (electrochromic device) (first)]

The electrochromic device described here is an electrochromic display device capable of controlling display by a method in which, by application of a reduction potential to a viewing (observation) side electrode, metal ions in an electrolyte solution are reduced to a metal and deposited on the electrode to generate black color; and by application of an oxidation potential with reversed polarity to the viewing side electrode, the metal deposited on the electrode is oxidized to metal ions and dissolved in the electrolyte solution to discolor the black coloration.

The metal ions which are deposited on the electrode to generate color by reduction are, for example, metal ions of silver, bismuth, copper, iron, chromium, nickel, or the like. In the electrolyte solution, an iodide or iodate of any of these metals is dissolved. When a bismuth compound or a silver compound is dissolved, the electrolyte solution is substantially transparent, and a dark color deposit is generated on the electrode, resulting in a good reversible coloration-discoloration reaction.

For example, in the case where en electrolyte solution in which a silver compound is dissolved is used, when a reduction potential is applied to the viewing side electrode, the reduction reaction Ag⁺ + e⁻ → Ag takes place on the negative electrode side, and the viewing side electrode is changed to black color by the Ag deposit.

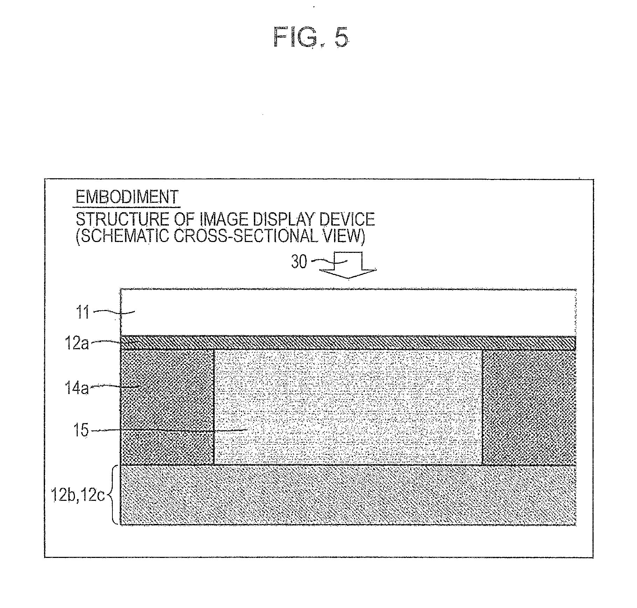

Fig. 5 is a cross-sectional view schematically showing a structural example of an image display device (electrochromic device) according to the embodiment of the present invention.

In Fig. 5, the conductive catalyst layer 16, the corrosion-resistant conductive layer 17a or 17b, the counter electrode substrate (second substrate) 18a or 18b, the main seal (sealant) 14a, the end seal (sealant) 14b, the end seal plate 19, and the electrolyte solution injection holes 20a and 20b, which are in common with Fig. 1 or 2, are not shown, and a description thereof is omitted.

As shown in Fig. 5, the electrochromic device is substantially constituted by a photoelectrode (viewing electrode) including a transparent photoelectrode substrate 11 and a transparent photoelectrode layer 12a disposed thereon; an electrolyte solution 15 injected into a space between the photoelectrode and a counter electrode layer 12b or 12c; and a main seal 14a which seals the electrolyte solution 15.

In the preparation of the electrolyte solution 15 containing metal ions that are deposited on the photoelectrode, topically, a silver compound, such as silver iodide (AgI) or silver iodate (AgIO₃); or a bismuth compound, such as bismuth iodide (BiI₃) or bismuth iodate(BI(IO₃)₃), is used. The electrolyte solution 15 may use lithium iodide, sodium iodide, potassium iodide, or the like as a supporting electrolyte.

It is also possible to place a sheet-shaped display medium, which is formed by allowing the electrolyte solution 15 to be held by a white material, between the photoelectrode and the counter electrode so that white display is performed when black display is not performed.
The display medium can be formed by a method in which, using a resin that is soluble in the solvent of the electrolyte solution 15, the electrolyte solution 15 is allowed to be held in a gel state. A white pigment (e.g., titanium oxide, zinc oxide, barium sulfate, zirconium oxide, lead oxide, or the like) may be used by dispersing it in the resin.

Preferably, the side surface, facing the electrolyte solution 15, of the counter electrode substrate 18a or 18b is formed into a mirror surface and a light-reflecting surface from the standpoint of brightening the display screen (viewing surface).

Furthermore, the electrode layer 12a is separated into parts. That is, a plurality of independent separate parts corresponding to pixels are formed in a matrix, and transparent thin-film transistors (hereinafter referred to as "transparent TFTs") are formed so as to correspond to the individual separate parts, the transparent TFTs being connected by gate lines and source lines. By controlling the voltage applied to the transparent TFTs, active matrix driving is performed. Thereby, it is possible to control coloration and discoloration in the separate parts corresponding to the individual pixels.

### [Structural example of image display device (electrochromic device) (second)]

An electrochromic device described here is a display device using an electrochromic dye in which discoloration or discoloration is reversibly caused by oxidation-reduction reaction by the application of a voltage.

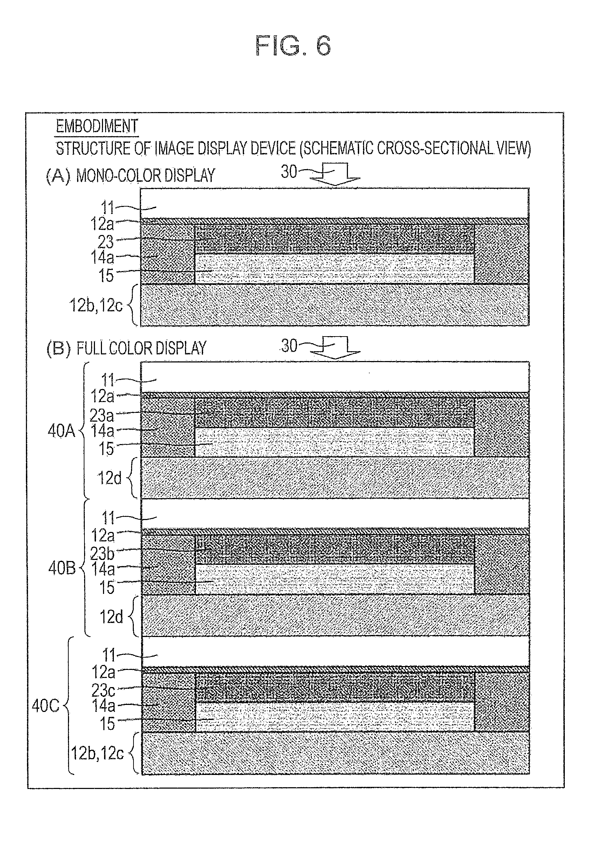

Fig. 6 is a cross-sectional view schematically showing a structural example of an image display device (electrochromic device) according to the embodiment of the present invention.

In Fig. 6, the conductive catalyst layer 16, the corrosion-resistant conductive layer 17a or 17b, the counter electrode substrate (second substrate) 18a or 18b, the main seal (sealant) 14a, the end seal (sealant) 14b, the end seal plate 19, the electrolyte solution 15, and the electrolyte solution injection holes 20a and 20b, which are in common with Fig. 1 or 2, are not shown, and a description thereof is omitted.

As shown in Fig. 6(A), the electrochromic device is substantially constituted by a photoelectrode (viewing electrode) including a transparent photoelectrode substrate 11 and a transparent photoelectrode layer 12a disposed thereon; an electrolyte solution 15 injected into a space between the photoelectrode and a counter electrode layer 12b or 12c; a main seal 14a which seals the electrolyte solution 15; and a semiconductor porous layer 23 carrying an electrochromic dye. In addition, preferably, the side surface, facing the electrolyte solution 15, of the counter electrode substrate (second substrate) 18a or 18b is formed into a mirror surface and a light-reflecting surface from the standpoint of brightening the display screen (viewing surface).

Next, the constituent elements of the electrochromic device will be described in sequence. However, as described above, a description of the conductive catalyst layer 16, the corrosion-resistant conductive layer 17a or 17b, the counter electrode substrate 18a or 18b, the main seal (sealant) 14a, the end seal (sealant) 14b, the end seal plate 19, the electrolyte solution 15, and the electrolyte solution injection holes 20a and 20b, which are in common with Fig. 1 or 2, is omitted.

### [Semiconductor porous layer]

The semiconductor porous layer 23 on which the electrochromic dye is carried is composed of a material having a large surface area so that a high electrochromic dye-carrying function can be obtained.

The semiconductor porous layer 23 can be composed of, for example, an oxide semiconductor, a complex oxide semiconductor, or the like. Examples of the oxide semiconductor that can be used include TiO₂ SnO₂ Fe₂O₃, SrTiO₃, WO₃, ZnO, ZrO₂ Ta₂O₅, Nb₂O₅ V₂O₅ Tn₂O₃, CdO, MnO, CoO, TiSrO₃, KTiO₃, Cu₂O, sodium titanate, barium titanate, and potassium niobate.

Examples of the complex oxide semiconductor that can be used include SnO₂-ZnO, Nb₂O₅-SrTiO₃, Nb₂O₅-Ta₂O₅, Nb₂O₅-ZrO₂, Nb₂O₅-TiO₂, Ti-SnO₂, Zr-SnO₂, Sb-SnO₂, Bi-SnO₂, and In-SnO₂. In particular, TiO₂, SnO₂, Sb-SnO₂, and In-SnO₂ can be preferably used.

As the electrochromic dye which is carried on the surface of and in micropores inside the semiconductor porous layer 23, any of known materials can be used.

As the electrochromic dye, an organic compound or an inorganic compound can be used. Examples of the organic compound that can be used include organic dyes, such as viologen dyes, styryl dyes, fluoran dyes, cyanine dyes, and aromatic amine dyes; and organic metal complexes, such as metal-bipyridyl complexes and metal-phthalocyanine complexes, wherein examples of the metal include rare-earth metals, lutetium (Lu), ytterbium (Yt), gadolinium (Gd), neodymium (Nd), europium (Eu), lanthanum (La), cerium (Ce), erbium (Er), and yttrium (Y)).

### [Image display]

In the electrochromic device shown in Fig. 6(A), the photoelectrode layer 12a is separated into parts so as to correspond to pixels. That is, the photoelectrode layer 12a formed so as to have a matrix including a plurality of separate parts is disposed on the photoelectrode substrate 11, and the semiconductor porous layer 23 is disposed on the individual separate parts.

An electrochromic dye is carried on the semiconductor porous layer 23 disposed on the individual separate parts. The electrochromic dye is a compound capable of generating any of magenta (M), yellow (Y), and cyan (C) colors. Transparent TFTs are formed on the photoelectrode layer 12a so as to correspond to the individual separate parts, the transparent TFTs being connected by gate lines and source lines. In this device, by controlling the voltage applied to the transparent TFTs, it is possible to control coloration and discoloration in the separate parts corresponding to the individual pixels, and thus an image display is possible on the basis of coloration and discoloration of any of magenta (M), yellow (Y), and cyan (C) colors.

Furthermore, the electrochromic device shown in Fig. 6(A) may be configured so as to enable full color display. In the electrochromic device shown in Fig. 6(A), the photoelectrode layer 12a is separated into parts so as to correspond to pixels. That is, the photoelectrode layer 12a formed so as to have a matrix including a plurality of separate parts including first, second, and third separate parts corresponding to magenta (M), yellow (Y), and cyan (C) is disposed on the photoelectrode substrate 11.

Semiconductor porous layers 23 are formed on the first, second, and third separate parts, and electrochromic dyes capable of generating magenta (M), yellow (Y), cyan (C) colors are respectively carried on the semiconductor porous layers 23 formed on the first, second, and third separate parts. In addition, in order to perform active matrix driving, transparent TFTs connected by gate lines and source lines are disposed on the transparent electrode 2 so as to correspond to the first, second, and third separate parts.

In the electrochromic device having such a structure, by controlling the voltage applied to the transparent TFTs, it is possible to control coloration and discoloration in the first, second, and third separate parts corresponding to the individual pixels, and thus a full color display can be performed.

Next, an electrochromic device capable of performing a full color display in which electrochromic devices having basically the same structure as that shown in Fig. 6(A) are stacked in three layers will be described.

Fig. 6(B) is a cross-sectional view illustrating a schematic structure of an example of an electrochromic device capable of performing a color display according to the embodiment of the present invention.

Electrochromic element structures 10A, 10B, and 10C shown in Fig. 6(B) each have basically the same structure as that shown in Fig. 6(A).

The semiconductor porous layer 23a of the display structure 40A, the semiconductor porous layer 23b of the display structure 40B, and the semiconductor porous layer 23c of the display structure 40C shown in Fig. 6(B) respectively carry electrochromic dyes that generate magenta (M), yellow (Y), and cyan (C) colors. The display structures 40A, 40B, and 40C may have the same electrolyte solution 15 or different electrolyte solutions 15.

In the display structures 40A, 40B, and 40C, the transparent photoelectrode layer 12a is separated into parts so as to correspond to pixels. That is, the photoelectrode layer 12a formed so as to have a matrix including a plurality of separate parts is disposed on the transparent photoelectrode substrate 11. The semiconductor porous layers 23a, 23b, and 23c are formed on the individual separate parts. Electrochromic dyes generating magenta (M), yellow (Y), cyan (C) colors are respectively carried on the semiconductor porous layers 23a, 23b, and 23c formed on the individual separate parts.

In the display structure 40C, the counter substrate 18a or 18b is composed of a metal plate as in the case shown in Fig. 1 or Fig. 2, and the counter electrode layer 12b or 12c is non-transparent. In the display structures 40A and 40B, the counter substrate 18a or 18b is composed of a transparent material as in the photoelectrode substrate 11, and the counter electrode layer (second electrode layer) 12d is substantially transparent.

By stacking the display structures 40A, 40B, and 40C described above, it is possible to configure an electrochromic device that performs a full color display in which coloration and discoloration can be reversibly displayed.

As in the case described with reference to Fig. 6(A), in each of the display structures 40A, 40B, and 40C, transparent TFTs are formed on the photoelectrode layer 12a so as to correspond to the individual separate parts, the transparent TFTs being connected by gate lines and source lines. By controlling the voltage applied to the transparent TFTs formed on the individual separate parts of the photoelectrode layer 12a with respect to each of the display structures 40A, 40B, and 40C, active matrix driving is performed. Thereby, it is possible to control coloration and discoloration in the separate parts corresponding to the individual pixels, and thus an image display can be performed on the basis of coloration and discoloration of magenta (M), yellow (Y), and cyan (C) colors.

In addition, in the electrochromic device described above, as the electrochromic dyes, a dye having the absorption maximum in the yellow (Y) region (in the range of 430 to 490 nm), a dye having the absorption maximum in the magenta (M) region (in the range of 500 to 580 nm), and a dye having the absorption maximum in the cyan (C) region (in the range of 600 to 700 nm) are preferably used.

As the electrochromic dye that can generate cyan (C) color, for example, 2-[2-[4-(methoxy)phenyl-]-1,3,5-hexatrienyl-3,3-dimethyl-5-phosphonoindolino[2,1-b]oxazolidine] can be used.

Furthermore, as the electrochromic dye that can generate magenta (M) color, for example, 2-[2-[4-(dimethylamino)phenyl]-1,3-butadienyl]-3,3-dimethyl-5-carboxylindolino[2,1-b]oxazolidine can be used.

Furthermore, as the electrochromic dye that can generate yellow (Y) color, for example, 2-[2-[4-(dimethylamino)phenyl]ethenyl]-3,3-dimethyl-5-phosphonoindolino[2,1-b]oxazolidine can be used.

Descriptions on the electrochromic devices have been made above. Next, an example of an anti-glare mirror will be described.

### [Structural example of anti-glare mirror]

An anti-glare mirror using an electrochromic coloration layer is a mirror in which, using the fact that the degree of change of coloration is changed by the applied voltage, adjustment of reflectance is made possible, and thereby, glare can be suppressed.

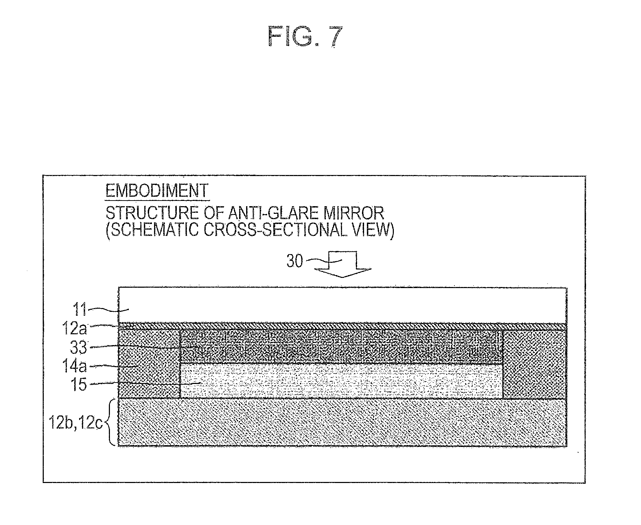

Fig. 7 is a cross-sectional view schematically showing a structural example of an anti-glare mirror according to the embodiment of the present invention.

As shown in Fig. 7, the anti-glare mirror is substantially constituted by a transparent photoelectric substrate 11 on the viewing side, a transparent photoelectrode layer 12a disposed thereon, a coloration electrode disposed thereon and including a coloration layer 33 containing an electrochromic compound, and an electrolyte solution 15 sealed in a space between the coloration electrode and a counter electrode layer (counter electrode) 12b or 12c which is similar to that shown in Fig. 1 or 2.

The counter electrode substrate (second substrate) 18a or 18b of the counter electrode layer 12b or 12c serves as a light-reflecting layer, and thus, preferably, its surface has smoothness. The counter electrode substrate 18a or 18b, for example, has a structure in which a metal layer having corrosion resistance to iodine is formed on a surface of a metal plate composed of aluminum, SUS, copper, or the like.

In Fig. 7, the conductive catalyst layer 16, the corrosion-resistant conductive layer 17a or 17b, the counter electrode substrate 18a or 18b, the main seal (sealant) 14a, the end seal (sealant) 14b, the end seal plate 19, the electrolyte solution 15, and the electrolyte solution injection holes 20a and 20b, which are in common with Fig. 1 or 2, are not shown, and a description thereof is omitted.

The coloration layer 33 is preferably composed of a reduction coloration-type oxide, such as tungsten oxide (WO₃) vanadium oxide (V₂O₅) , molybdenum oxide (Mo₂O₃) , iridium oxide (Ir₂O₃), nickel oxide (NiO), or manganese oxide (MnO₂), and the coloration layer 33 can be formed on the photoelectrode layer 12a by a known method.

When a predetermined DC voltage is applied such that the coloration electrode has a negative potential and the counter electrode has a positive potential, an oxidation reaction of iodine ions (3I⁻ →I₃⁻ + 2e⁻) takes place on the surface of the counter electrode. A reduction reaction (xM⁺ + WO₃ + xe⁻ → MₓWO₃ (M⁺ = Li⁺, Na⁺, H⁺)) takes place in the coloration layer 33, and the reduction product (MₓWO₃) causes coloration. Furthermore, when plus and minus of the voltage applied to the coloration electrode and the counter electrode are reversed, reverse reactions to those described above take place, resulting in disappearance of coloration to recover the transparent state.

By adjusting the voltage applied to the coloration electrode and the counter electrode on the basis of the signal obtained by monitoring the intensity of reflected light from the counter electrode, the degree of coloration of the coloration layer 33 is changed so that the intensity of reflected light from the counter electrode is substantially uniform. Thus, the reflectance can be adjusted. Consequently, the degree of glare in the viewing direction 30 can be set substantially uniform.

Descriptions on the example of the anti-glare mirror have been made above. Next, Example regarding a dye-sensitized solar cell will be described.

### <Example>

The dye-sensitized solar cell in Example of the present invention has the structure shown in Fig. 2.

### [Photoelectrode]

A glass substrate (15 mm × 20 mm rectangular, sheet resistance 10 Ω/square, manufactured by Nippon Sheet Glass Co., Ltd.) having a fluorine-doped tin oxide conductive layer (FTO layer) provided thereon as a photoelectrode layer 12a was used as a photoelectrode.

### [Semiconductor porous layer]

A semiconductor porous layer 13 was formed on the FTO layer. The semiconductor porous layer 13 was formed by applying titanium oxide (TiO₂) with a medium particle diameter of 20 nmφ at a thickness of 15 µm as a lower layer and titanium oxide (TiO₂ with a medium particle diameter of 400 nmφ at a thickness of 5 µm as an upper layer with a screen printing machine, and then performing sintering treatment at 510°C for 30 minutes.

### [Sensitizing dye and carrying thereof]

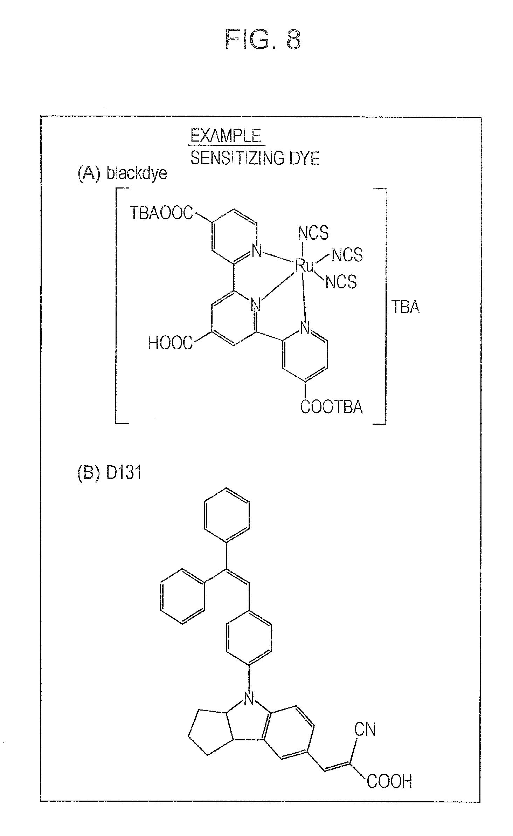

Fig. 8 is a diagram showing examples of the sensitizing dye used in Example of the present invention.

Fig. 8(A) shows a trithiocyanato(4,4',4"-tricarboxy-2,2':6',2"-terpyridine)ruthenium(II)tri-tetrabutylammonium complex (manufactured by Solaronix SA, 620-1H3TBA, Batch Number 34) (a dye commonly called black dye or N749). Note that, in Fig. 8(A), TBA represents tetrabuthylammonium) (N ((CH₂)₃CH₃)₄). Fig. 8 (B) shows a merocyanine dye D131 (manufactured by Mitsubishi Paper Mills Limited).

A titanium oxide (TiO₂ semiconductor porous layer was immersed in a mixed dye solution containing D131 (concentration 0.1875 mM) and black dye (concentration 0.5625 mM) dissolved in a mixed liquid of t-butanol:acetonitrile = 1:1, as a solvent, for 96 hours, and thereby, the dyes were carried on titanium oxide (TiO₂).

### [Counter electrode]

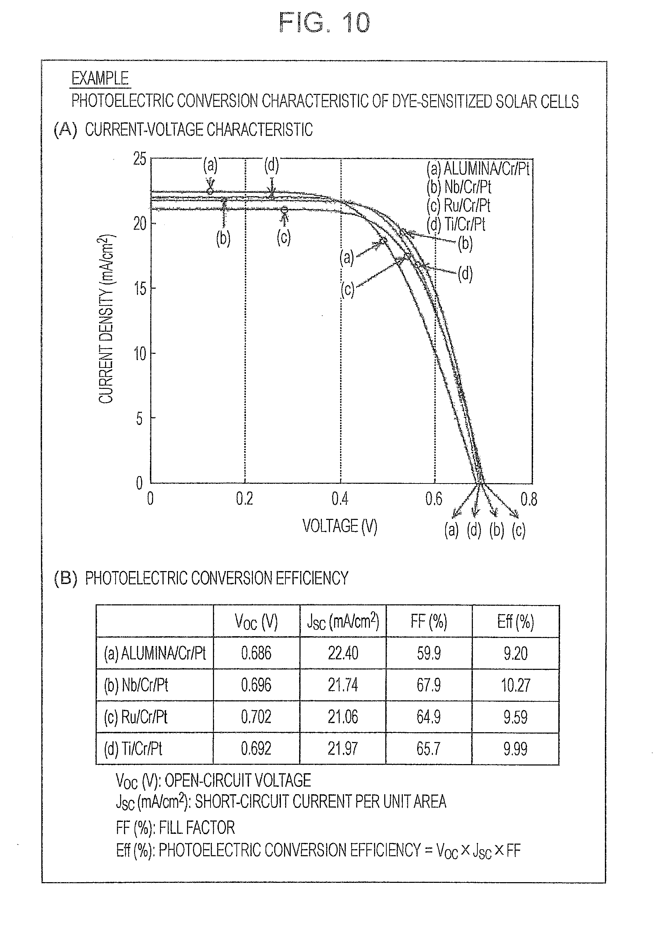

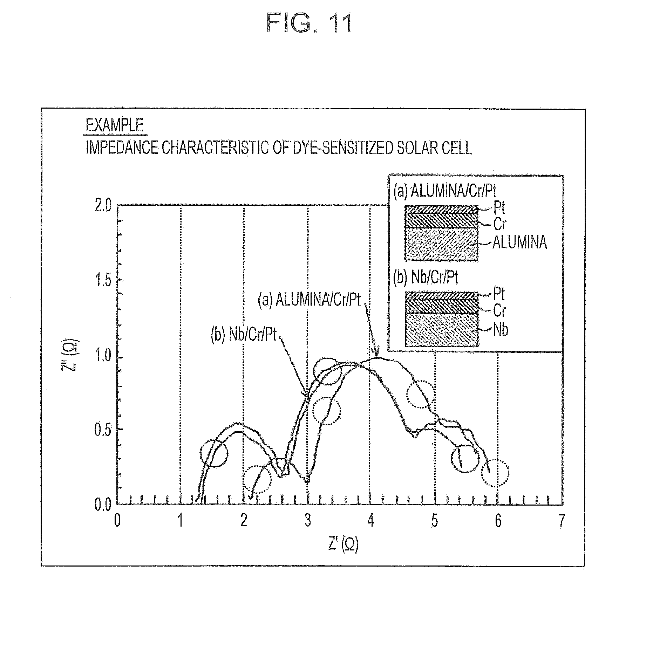

A Nb plate, a Ru plate, and a Ti plate each with a thickness of 0.4 mm were used as the counter electrode substrate 18b. A Cr layer with a thickness of 500 Å was formed as the corrosion-resistant conductive layer 17b on each of the plates, and a Pt layer with a thickness of 1,000 Å was formed on the Cr layer. Thereby, counter electrodes were obtained. The Cr layer and the Pt layer were formed by sputtering. In the following description including Figs. 10 and 11, the counter electrodes are abbreviated as Nb/Cr/Pt, Ru/Cr/Pt, and Ti/Cr/Pt.

### [Electrolyte solution]

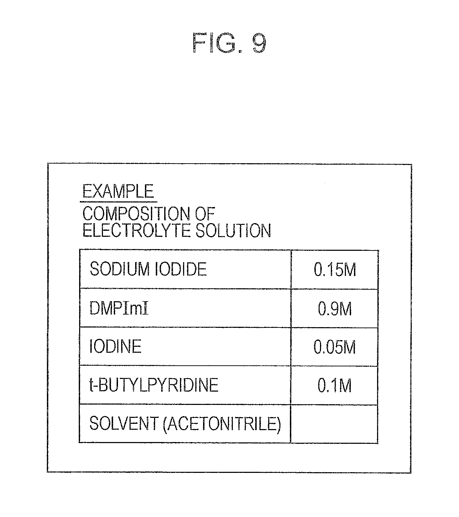

Fig. 9 is a table showing an example of the composition of an electrolyte solution used in a dye-sensitized solar cell in Example of the present invention.

As shown in Fig. 9, sodium iodide (concentration 0.15 M), DMPImI (concentration 0.9 M), iodine (concentration 0.05 M), and t-butylpyridine (concentration 0.1 M) were mixed to acetonitrile used as a solvent to prepare an electrolyte solution 15. Tert-butylpyridine is an additive to be added for the purpose of preventing reverse electron transfer in the electrolyte solution and improving the open-circuit voltage and the short-circuit current. Note that DMPImI represents 1,2-dimethyl-3-propyl-1H-imidazole-3-ium·iodide (C₈H₁₅N₂).

### [Injection of electrolyte solution and seal (sealant)]

A main seal (sealant) 14a was formed by annularly applying an ultraviolet-curable resin (manufactured by ThreeBond Co., Ltd., 31X-101 series resin) on the photoelectrode, and the photoelectrode and the counter electrode were stacked with the main seal 14a therebetween. The main seal 14a was cured by irradiation of ultraviolet light to bond the photoelectrode and the counter electrode to each other.

The electrolyte solution 15 was injected into an inner space formed by the photoelectrode and the counter electrode, which were bonded to each other, from one of electrolyte solution injection holes 20a and 20b formed in the counter electrode, the other one of the injection holes 20a and 20b being used as an air vent. Next, using a glass plate as the end seal plate 19 and an ultraviolet-curable resin

### (manufactured by ThreeBond Co., Ltd., 31X-101 series resin) as the end seal 14b, the electrolyte solution injection holes 20a and 20b were sealed.

Note that the distance of the space between the photoelectrode and the counter electrode which have been bonded to each other is 30 µm, and the light irradiation area of the inner space is 150 mm × 150 mm.

### <Comparative Example>

An alumina (A1₂O₃) plate (insulator substrate) with a thickness of 0.4 mm was used as the counter electrode substrate 18b. A Cr layer with a thickness of 500 Å was formed as the corrosion-resistant conductive layer 17b. A Pt layer with a thickness of 1,000 Å was formed as the conductive catalyst layer 16 on the Cr layer. Thereby, a counter electrode was obtained. The Cr layer and the Pt layer were formed by sputtering. In the following description including Figs. 10 and 11, the counter electrode is abbreviated as alumina/Cr/Pt. The structure other than this is the same as that of Example, and a description thereof will be omitted.

Fig. 10 includes a diagram showing an example of the photoelectric conversion characteristic of dye-sensitized solar cells in Example of the present invention.

In Fig. 10, (a) indicates the results regarding the dye-sensitized cell having the counter electrode alumina/Cr/Pt in Comparative Example, and (b), (c), and (d) respectively indicate results regarding the dye-sensitized cells having counter electrodes Nb/Cr/Pt, Ru/Cr/Pt, and Ti/Cr/Pt in Example.

Fig. 10(A) shows the current-voltage characteristic of the dye-sensitized solar cells, in which the horizontal axis represents the voltage (V), and the vertical axis represents the current density J (mA/cm²). As shown in Fig. 10(A), in the dye-sensitized cell of Comparative Example, the decrease in the current density on the high voltage side is large compared with the dye-sensitized cells of Example.

Fig. 10(B) shows the open-circuit voltage V_{oc} (V), the short-circuit current density J_{sc} (mA/cm²), the fill factor FF (%), and the photoelectric conversion efficiency E_{ff} (%) (=V_{oc} x J_{sc} × FF) obtained from the current-voltage curve under irradiation of artificial sunlight (AM 1.5, 100 mW/cm²) .

When the fill factor FF of the dye-sensitized solar cell of Comparative Example is set to be 1.0, the fill factors FF for the dye-sensitized solar cells (b), (c), and (d) of Example are 1.13, 1.08, and 1.10, respectively. Furthermore, when the photoelectric conversion efficiency E_{ff} of the dye-sensitized solar cell of Comparative Example is set to be 1.0, the photoelectric conversion efficiencies E_{ff} of the dye-sensitized solar cells (b), (c), and (d) of Example are 1.12, 1.04, and 1.09, respectively.

Fig. 11 shows an example of a Cole-Cole plot diagram showing the impedance characteristic of the dye-sensitized solar cell in Example of the present invention. In Fig. 11, the horizontal axis represents the real part Z' (Ω) of the impedance, and the vertical axis represents the imaginary part Z" (Ω) of the impedance. In Fig. 11, substantial cross-sectional views showing the layer structure of the counter electrode are shown.

In Fig. 11, (a) indicates the results regarding the dye-sensitized cell having the counter electrode alumina/Cr/Pt in Comparative Example. Furthermore, in Fig. 11, (b) indicates the results regarding two samples of the dye-sensitized cell having the counter electrode Nb/Cr/Pt in Example (two curves indicated by small solid-line circles), and with respect to the two samples of the dye-sensitized cell, the impedance characteristic has good reproducibility.

In the impedance characteristic of the dye-sensitized solar cell shown in Fig. 11, as the resistance of the counter electrode and the electrolyte solution decreases, the starting position of the circular arc starts from the lower value of the real part Z'. Consequently, it is evident that the series resistance of the dye-sensitized solar cell including the counter electrode Nb/Cr/Pt is lower than the series resistance of the dye-sensitized solar cell including the counter electrode having the alumina substrate (insulator substrate), i.e., counter electrode alumina/Cr/Pt.

In addition, the sheet resistance of the counter electrode in Example was 8.8 × 10⁻⁴ Q/cm² for Nb/Cr/Pt, 8.4 × 10⁻⁴ Q/cm² for Ru/Cr/Pt, and 9.0 × 10⁻⁴ Ω/cm2 for Ti/Cr/Pt.
On the other hand, in the counter electrode of Comparative Example, the sheet resistance of the counter electrode (glass/Cr/Pt) in which alumina was replaced with glass was 2.0 Ω/cm². It is expected that the sheet resistance of the counter electrode of Comparative Example would be three orders of magnitude larger than the sheet resistance of the counter electrode of Example.

As described above, in the structure in which the counter electrode including the metal substrate is used, in particular, in the structure in which the counter electrode Nb/Cr/Pt including Nb as the substrate and the Cr layer and Pt disposed thereon is used, it is possible to improve corrosion resistance to the electrolyte solution containing iodine, and compared with the structure in which the counter electrode including the insulating substrate is used, it is possible to decrease the sheet resistance of the counter electrode, to decrease the series resistance of the dye-sensitized solar cell, to improve the fill factor FF, and to improve the photoelectric conversion characteristic.

The functional devices according to the present invention have been described above. However, it is to be understood that the present invention is not limited to the embodiment and Example described above, but various modifications may be made on the basis of the technical idea of the present invention.

For example, in the functional devices, the photoelectrode substrate, the photoelectrode layer, the conductive catalyst layer, the corrosion-resistant conductive layer, the counter electrode substrate, the counter electrode layer, the sensitizing dye or electrochromic dye-carrying semiconductor porous layer, the electrochromic compound-containing coloration layer, the sealant, the composition of the electrolyte solution, and the like are not limited to those exemplified in the embodiment and Example, but may be appropriately changed according to intended use. Furthermore, the present invention can also be applied to functional devices, such as chemical cells, biosensors, and capacitors, as long as an electrolyte solution is used.

### Industrial Applicability

The present invention can provide a functional device in which a metal substrate is used, corrosion due to an electrolyte solution is inhibited, and series resistance can be reduced.

### Reference Signs List

10 SUNLIGHT
11 FIRST SUBSTRATE
12a FIRST ELECTRODE LAYER
13 SEMICONDUCTOR POROUS LAYER
12b to 12d SECOND ELECTRODE LAYER
14a MAIN SEAL
14b END SEAL
15 ELECTROLYTE SOLUTION
30 VIEWING DIRECTION
16 CONDUCTIVE CATALYST LAYER
17a, 17b CORROSION-RESISTANT CONDUCTIVE LAYER
18a, 18b SECOND SUBSTRATE
19 END SEAL PLATE
20a, 20b ELECTROLYTE SOLUTION INJECTION HOLE
21a, 21b LEAD ELECTRODE
33 COLORATION LAYER
23, 23a to 23c SEMICONDUCTOR POROUS LAYER
40A, 40B, 40C DISPLAY STRUCTURE

## Claims

1. A functional device comprising:
a first substrate having a light-transmitting property;
an electrode layer having a conductive property and a light-transmitting property and disposed on the first substrate;
a second substrate composed of a metal;
an electrolyte solution filled in a space between the first substrate and the second substrate;
a corrosion-resistant conductive layer having corrosion resistance to the electrolyte solution and disposed on the second substrate; and
a conductive catalyst layer having a conductive property and a catalytic activity and disposed on a surface of the corrosion-resistant conductive layer.

2. The functional device according to Claim 1, wherein the metal is any of aluminum, copper, silver, gold, and stainless steel; and the corrosion-resistant conductive layer is composed of any of titanium, chromium, nickel, niobium, molybdenum, ruthenium, rhodium, tantalum, tungsten, iridium, platinum, and Hastelloy.

3. The functional device according to Claim 2, wherein the conductive catalyst layer is composed of any of carbon, ruthenium, rhodium, palladium, osmium, iridium, platinum, and conductive polymers.

4. The functional device according to Claim 1, wherein the metal is any of titanium, niobium, molybdenum, ruthenium, rhodium, tantalum, tungsten, iridium, platinum, and Hastelloy.

5. The functional device according to Claim 4, wherein the corrosion-resistant conductive layer is composed of chromium or nickel.

6. The functional device according to Claim 1, wherein the metal is chromium or nickel and also serves as the corrosion-resistant conductive layer.

7. The functional device according to Claim 5 or 6, wherein the conductive catalyst layer contains any of carbon, ruthenium, rhodium, palladium, osmium, iridium, platinum, and conductive polymers.

8. The functional device according to any one of Claims 1 to 7, wherein the electrolyte solution contains iodine/iodide generating a redox couple I₃⁻/I⁻.

9. The functional device according to any one of Claims 1 to 7, wherein an opening for filling the space with the electrolyte solution is formed so as to pass through the second substrate, and the corrosion-resistant conductive layer and the conductive catalyst layer are disposed in that order from the lower side on a surface of the opening.

10. The functional device according to Claim 1, wherein the area of the second substrate is smaller than the area of the first substrate, and a lead electrode is provided so as to be connected to a surface of the second substrate opposed to the surface in contact with the electrolyte solution.

11. The functional device according to any one of Claims 1 to 10, wherein the functional device is configured as a device having a photoelectric conversion function, an image display function, or an anti-glare function.

12. The functional device according to Claim 11, wherein the functional device is configured as a device having a photoelectric conversion function and also configured as a dye-sensitized photoelectric conversion device in which a semiconductor porous layer carrying a sensitizing dye is disposed on a surface of the electrode layer, electrons of the sensitizing dye excited by light absorption are extracted to the semiconductor porous layer, and the sensitizing dye which has lost the electrons is reduced by a reducing agent in the electrolyte solution.

13. The functional device according to Claim 11, wherein the functional device is configured as a device having an image display function in which the electrolyte solution contains metal ions that are deposited by reduction reaction on the electrode layer to generate color.

14. The functional device according to Claim 11, wherein the functional device is configured as a device having an image display function in which a semiconductor porous layer carrying an electrochromic dye that generates color by oxidation reaction or reduction reaction is disposed on the electrode layer.

15. The functional device according to Claim 11, wherein the functional device is configured as a device having an anti-glare function in which a coloration layer containing an oxidation coloration-type or reduction coloration-type electrochromic compound is disposed on a surface of the electrode layer.

16. A method for producing a functional device comprising:
a first step of forming a corrosion-resistant conductive layer having corrosion resistance to an electrolyte solution on a surface of a substrate composed of a metal; and
a second step of forming a conductive catalyst layer having a conductive property and a catalytic activity on a surface of the corrosion-resistant conductive layer.

17. The method for producing a functional device according to Claim 16, wherein the metal is any of aluminum, copper, silver, gold, and stainless steel; and the conductive catalyst layer is composed of any of titanium, chromium, nickel, niobium, molybdenum, ruthenium, rhodium, tantalum, tungsten, iridium, platinum, and Hastelloy.

18. The method for producing a functional device according to Claim 17, wherein the conductive catalyst layer is composed of any of carbon, ruthenium, rhodium, palladium, osmium, iridium, platinum, and conductive polymers.

19. The method for producing a functional device according to Claim 17, further comprising, prior to the first step, a step of forming an opening for injecting the electrolyte solution in the substrate so as to pass through the substrate, wherein, in the first and second steps, the corrosion-resistant conductive layer and the conductive catalyst layer are formed in that order from the lower side on a surface of the opening.
